(19) **Europäisches Patentamt / European Patent Office / Office européen des brevets**

(11) **EP 3 476 038 B1**

(12) **EUROPÄISCHE PATENTSCHRIFT**

(45) Veröffentlichungstag und Bekanntmachung des Hinweises auf die Patenterteilung:
**23.02.2022 Patentblatt 2022/08**

(21) Anmeldenummer: **17720716.4**

(22) Anmeldetag: **21.04.2017**

(51) Internationale Patentklassifikation (IPC):
*H02P 21/14* (2016.01)   *H02P 6/10* (2006.01)
*H02P 6/182* (2016.01)   *H02P 21/10* (2016.01)
*H02P 25/14* (2006.01)   *H02P 23/22* (2016.01)
*H02P 29/60* (2016.01)

(52) Gemeinsame Patentklassifikation (CPC):
**H02P 21/14; H02P 6/10; H02P 6/182**

(86) Internationale Anmeldenummer:
**PCT/EP2017/059473**

(87) Internationale Veröffentlichungsnummer:
**WO 2017/220234 (28.12.2017 Gazette 2017/52)**

(54) **VERFAHREN ZUR REGELUNG EINER SYNCHRONMASCHINE UND REGELVORRICHTUNG FÜR EINE SYNCHRONMASCHINE**

METHOD FOR CONTROLLING A SYNCHRONOUS MACHINE AND CONTROL DEVICE FOR A SYNCHRONOUS MACHINE

PROCÉDÉ DE RÉGULATION D'UNE MACHINE SYNCHRONE ET DISPOSITIF DE RÉGULATION DESTINÉ À UNE MACHINE SYNCHRONE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.06.2016 DE 102016211406**

(43) Veröffentlichungstag der Anmeldung:
**01.05.2019 Patentblatt 2019/18**

(73) Patentinhaber: **Robert Bosch GmbH**
**70442 Stuttgart (DE)**

(72) Erfinder:
• **BRAUN, Martin**
**72149 Neustetten-Wolfenhausen (DE)**
• **RAPP, Holger**
**71254 Ditzingen (DE)**
• **KURZ, Stefan**
**60322 Frankfurt (DE)**

(56) Entgegenhaltungen:
**EP-A2- 0 831 580     DE-A1- 19 860 446**
**DE-A1-102004 001 932     DE-A1-102011 009 872**
**DE-A1-102011 089 341**

**EP 3 476 038 B1**

**Beschreibung**

Die vorliegende Erfindung betrifft ein Verfahren zur Regelung einer Synchronmaschine sowie eine Regelvorrichtung für eine Synchronmaschine.

Stand der Technik

Die Druckschrift WO 2010 043 454 A1 offenbart ein Verfahren und eine Vorrichtung zur feldorientierten Regelung einer Synchronmaschine. Hierzu erfolgt eine Ermittlung eines Querstrom-Sollwertes, eines Längsstrom-Sollwertes, eines Querstrom-Istwertes und eines Längsstrom-Istwertes. Dabei dient der Querstrom der Drehmomentbildung der Maschine, während der Längsstrom der Feldbildung bzw. Feldschwächung dient. Diese Werte werden einem Regler zugeführt, der eine Längsspannungskomponente und eine Querspannungskomponente ermittelt. Diese werden in Spannungen eines Mehrphasen-Drehspannungssystems umgewandelt und dann an einen Pulswechselrichter weitergeleitet. Weiterhin werden die Statorströme der Maschine erfasst und unter Kenntnis des Rotorpositionswinkels in den Längs- und den Querstromistwert gewandelt. Eine Regelung der Synchronmaschine erfolgt durch die Ausgangssignale des Pulswechselrichters.

Umrichtergespeiste Synchronmaschinen werden in der Regel unabhängig von der Form ihrer durch das Erregerfeld induzierten Spannung mit sinusförmigen Strömen betrieben. Auch eine Spannungsvorsteuerung zur Einbringung dieser sinusförmigen Ströme erfolgt dabei sinusförmig. Abweichungen von der Sinusform in der durch das Erregerfeld induzierten Spannung können zu Störungen im Stromverlauf führen. Diese können beispielsweise durch einen Störgrößenbeobachter kompensiert werden. Auf diese Weise wird in jedem Fall ein nahezu sinusförmiger Stromverlauf in die Synchronmaschine eingeprägt. Die Druckschrift EP 0 831 580 A2 offenbart eine Einrichtung zur Antriebsstromsteuerung eines elektrisch kommutierten Waschmaschinen-Permanentmagnet-Motors mit geringem baulichen Sensoraufwand für einen geräuscharmen Antrieb mit hohem Wirkungsgrad. Die Druckschrift DE 10 2011 089 341 A1 offenbart ein Verfahren zur Bestimmung eines Winkels zwischen einem Stator und einem Rotor einer fremderregten Synchronmaschine. Die Druckschrift DE 10 2004 001 932 A1 offenbart ein Verfahren zur Ansteuerung eines elektronisch kommutierten Lüftermotors, welcher entweder für eine minimale Geräuschentwicklung oder für einen maximalen Wirkungsgrad angesteuert wird.

Offenbarung der Erfindung Die vorliegende Erfindung schafft ein Verfahren zur Regelung einer Synchronmaschine gemäß Patentanspruch 1 und eine Regelvorrichtung für eine Synchronmaschine mit den Merkmalen des Patentanspruchs 8.

Demgemäß ist vorgesehen:
Ein Verfahren zur Regelung einer Synchronmaschine mit einem Schritt zum Ermitteln eines Spannungsverlaufs an den Klemmen der im Leerlauf drehenden Synchronmaschine und des Berechnens eines Stromverlaufs, der im Zusammenwirken mit dem ermittelten Spannungsverlauf zum Erreichen eines vorbestimmten Zustands an der Synchronmaschine geeignet ist. Das Verfahren umfasst ferner einen Schritt zum Berechnen eines Spannungsverlaufs an den Klemmen der Synchronmaschine, der dazu geeignet ist, den berechneten Stromverlauf an der Synchronmaschine einzustellen. Schließlich umfasst das Verfahren einen Schritt zum Ansteuern der Synchronmaschine mit dem berechneten Spannungsverlauf.

Weiterhin ist vorgesehen:
Eine Regelvorrichtung für eine Synchronmaschine mit einer Spannungsmesseinrichtung, einer Rechenvorrichtung und einer Ansteuervorrichtung. Die Spannungsmesseinrichtung ist dazu ausgelegt, einen Spannungsverlauf zu ermitteln, der bei der im Leerlauf drehenden Synchronmaschine in deren Statorwicklung induziert wird und der somit dann an den Statorklemmen der Maschine abgegriffen werden kann. Die Rechenvorrichtung ist dazu ausgelegt, einen Stromverlauf zu berechnen, der im Zusammenwirken mit dem ermittelten Spannungsverlauf zum Erreichen eines vorbestimmten Zustands der Synchronmaschine geeignet ist. Die Rechenvorrichtung ist ferner dazu ausgelegt, einen Spannungsverlauf an den Klemmen der Synchronmaschine zu berechnen, der dazu geeignet ist, den berechneten Stromverlauf an der Synchronmaschine einzustellen. Die Ansteuervorrichtung ist dazu ausgelegt, die Synchronmaschine mit dem berechneten Spannungsverlauf anzusteuern.

Ferner ist vorgesehen:
Ein elektrisches Antriebssystem mit einer Synchronmaschine, einer erfindungsgemäßen Regelvorrichtung, und einem Spannungswandler, der dazu ausgelegt ist, den durch die Regelvorrichtung berechneten Spannungsverlauf an der Synchronmaschine einzustellen.

Vorteile der Erfindung

Der vorliegenden Erfindung liegt die Erkenntnis zugrunde, dass bei einem Zusammenwirken von nicht-sinusförmigen induzierten Spannungen in einer Synchronmaschine mit eingeprägten sinusförmigen Strömen ein pulsierender Drehmomentverlauf auftritt. In diesem Fall liegt somit kein konstantes Drehmoment vor. Bei geringen Motordrehzahlen kann dieses pulsierende Drehmoment sich als Ruckeln bemerkbar machen. Bei höheren Drehzahlen kann aufgrund des pulsierenden Drehmoments beispielsweise eine unerwünschte Geräuschentwicklung auftreten.

Der vorliegenden Erfindung liegt daher die Idee zugrunde, dieser Erkenntnis Rechnung zu tragen und eine Regelung für eine Synchronmaschine vorzusehen, die auch bei nicht-sinusförmigen induzierten Spannungen in der Synchronmaschine beispielsweise zu einem nahezu konstanten Drehmoment führt.

Durch die erfindungsgemäße Ansteuerung einer Synchronmaschine kann dabei insbesondere auch bei einer Kombination von Synchronmoment und Reluktanzmoment die Stromform für die Ansteuerung der Synchronmaschine derart modifiziert werden, dass ein konstantes Gesamtdrehmoment entsteht. Auch für andere Anforderungen, wie beispielsweise eine konstante Leistungsaufnahme durch die Synchronmaschine oder ähnliches, kann die Stromform für die Ansteuerung der Synchronmaschine dabei jeweils so modifiziert werden, dass der in die Synchronmaschine einzuprägende Strom stets unter Verwendung des Verlaufs der induzierten Spannung bestimmt wird.

Die Strom- und/oder Spannungsverläufe für die Ansteuerung der Synchronmaschine können dabei automatisch und individuell an die jeweils zu betreibende Maschine angepasst werden, ohne dass hierdurch ein erhöhter Aufwand entsteht.

Darüber hinaus kann die Stromform für die Ansteuerung der Synchronmaschine auch Alterungs- oder Temperatureffekte, sowie gegebenenfalls weitere Einflüsse berücksichtigen, die den Verlauf der induzierten Spannung in der Synchronmaschine verändern können. Auch hierbei ist jeweils automatisch eine Anpassung an die gegebenen Verhältnisse möglich.

Der in dieser Beschreibung und in den Patentansprüchen verwendete Begriff "Stromverlauf" kann hierbei einen Querstromverlauf und/oder Längsstromverlauf umfassen. Insbesondere können das Längs- und das Querstromsystem normalerweise voneinander verschiedene Verläufe über den Polradwinkel aufweisen. In gleicher Weise kann auch der Begriff "Spannungsverlauf" einen Querspannungsverlauf und/oder Längsspannungsverlauf umfassen.

Gemäß einer Ausführungsform umfasst der vorbestimmte Zustand, für dessen Erreichen der in die Synchronmaschine einzuprägende Stromverlauf berechnet wird, ein konstantes Drehmoment der Synchronmaschine insbesondere mit oder ohne Berücksichtigung eines Reluktanzmoments der Synchronmaschine oder eine konstante Leistungsaufnahme der Synchronmaschine. Weitere Anforderungen, an den der einzuprägende Stromverlauf unter Verwendung des induzierten Spannungsverlaufs der Synchronmaschine angepasst werden kann, sind darüber hinaus ebenso möglich.

Gemäß einer weiteren Ausführungsform umfasst das Ermitteln des induzierten Spannungsverlaufs ein Messen der Spannung an den Klemmen der Synchronmaschine im Leerlauf der Synchronmaschine. Beispielsweise kann hierzu bei einer stromlos rotierenden Synchronmaschine die elektrische Spannung an den Klemmen der Synchronmaschine oder an einer mit den Klemmen der Synchronmaschine gekoppelten Vorrichtung, wie zum Beispiel einem Stromrichter oder ähnlichem, erfasst werden. Insbesondere kann beispielsweise die induzierte Spannung bei einer stromlos im Leerlauf rotierenden Synchronmaschine mittels bereits vorhandenen Spannungsmessvorrichtungen am Ausgang eines mit der Synchronmaschine elektrisch gekoppelten Spannungsstellers bestimmt werden.

Gemäß einer weiteren Ausführungsform umfasst das Ermitteln des induzierten Spannungsverlaufs ein Messen des Spannungsverlaufs einer bestromten Synchronmaschine. Zum Ermitteln des induzierten Spannungsverlaufs werden dabei von dem gemessenen Spannungsverlauf der bestromten Synchronmaschine die Spannungsabfälle über bekannten Impedanzen der Statorwicklung, insbesondere über bekannten Induktivitäten und ohmschen Widerständen, subtrahiert. Auf diese Weise ist es auch für eine bestromte Synchronmaschine möglich, die induzierten Spannungsverläufe zu ermitteln.

Gemäß einer weiteren Ausführungsform umfasst das Berechnen des Stromverlaufs zum Erreichen des vorbestimmten Zustands der Synchronmaschine und/oder das Berechnen des Spannungsverlaufs zum Einstellen des berechneten Stromverlaufs eine Transformation zwischen einem statororientierten Koordinatensystem und einem feldorientierten Koordinatensystem. Die Transformation zwischen statororientiertem und feldorientiertem Koordinatensystem ermöglicht eine effiziente Regelung elektrischer Maschinen unabhängig von der Drehzahl der elektrischen Maschine. Eine solche Transformation ist beispielsweise als "Park-Transformation" bekannt.

Gemäß einer Ausführungsform ist die Transformation zwischen statororientiertem Koordinatensystem und feldorientiertem Koordinatensystem auf einen nicht-sinusförmigen Stromverlauf und/oder einen nicht-sinusförmigen Spannungsverlauf angepasst. Durch die Anpassung der Transformationsgleichungen auf nicht-sinusförmige Strom- bzw. Spannungsverläufe kann auch für derartige nicht-sinusförmige Strom-/Spannungsverläufe eine effiziente Berechnung erfolgen.

Gemäß einer Ausführungsform umfasst der Schritt zum Ermitteln des induzierten Spannungsverlaufs eine Tiefpassfilterung. Insbesondere kann der Schritt zum Ermitteln des induzierten Spannungsverlaufs höherfrequente Frequenzanteile wie beispielsweise Oberschwingungen oberhalb eines vorbestimmten Vielfachen der Grundfrequenz eliminieren. Beispielsweise ist eine Begrenzung des Frequenzspektrums des induzierten Spannungsverlaufs auf das Siebenfache, das Elffache oder das Dreizehnfache der Grundfrequenz möglich.

Gemäß einer Ausführungsform der Regelvorrichtung für die Synchronmaschine umfasst die Regelvorrichtung einen Speicher. Dieser Speicher kann dazu ausgelegt sein, den von der Spannungsmesseinrichtung ermittelten induzierten Spannungsverlauf abzuspeichern. Besonders vorteilhaft ist es dabei, den ermittelten induzierten Spannungsverlauf als Funktion des elektrischen Polradwinkels in diesem Speicher abzulegen. Weiter vorteilhaft ist es dabei, beim Ablegen des Spannungsverlaufs in diesem Speicher eine Normierung auf eine Nennspannung, die Grundschwingungsamplitude oder den Effektivwert der induzierten Spannung vorzunehmen. Die Regeleinrichtung kann insbesondere dazu ausgelegt sein, den Stromverlauf unter Verwendung des in dem Speicher abgespeicherten Spannungsverlaufs zu berechnen. Auf diese Weise kann ein zuvor einmalig ermittelter induzierter Spannungsverlauf über die Betriebsdauer der Synchronmaschine verwendet werden, ohne dass regelmäßig eine erneute Ermittlung des induzierten Spannungsverlaufs erfolgen muss. Beispielsweise kann der induzierte Spannungsverlauf am Ende der Produktion der Synchronmaschine oder nach dem Einbau der Synchronmaschine in ein Produkt, wie beispielsweise ein Elektro- oder Hybridfahrzeug erfolgen. Darüber hinaus ist auch eine regelmäßige oder ereignisgetriggerte erneute Ermittlung des induzierten Spannungsverlaufs möglich. Auch in diesem Fall kann die jeweils ermittelte induzierte Spannung in einem Speicher abgelegt werden, um darauf basierend die Parameter für die Ansteuerung der Synchronmaschine zu berechnen.

In der hier vorliegenden Beschreibung wird der Einfachheit halber anstelle der Bezeichnung "elektrischer Polradwinkel" der Begriff "Polradwinkel" verwendet.

Kurze Beschreibung der Zeichnungen Die vorliegende Erfindung wird nachfolgend anhand der in den schematischen Figuren der Zeichnungen angegebenen Ausführungsbeispiele näher erläutert. Dabei zeigen:

Figur 1:     eine schematische Darstellung einer Regelvorrichtung für eine Synchronmaschine gemäß einer Ausführungsform; und

Figur 2:     eine schematische Darstellung eines Ablaufdiagramms, wie es einem Verfahren zur Regelung einer Synchronmaschine zugrunde liegt.

Figur 3a,b:  eine Darstellung des dreiphasigen Zeigerdiagramms mit den Achsen 1, 2 und 3, des zugehörigen orthogonalen Koordinatensystems mit den Achsen a = 1 und b sowie eines mit dem Rotor umlaufenden feldorientierten Koordinatensystems mit der Längsachse d und der Querachse q;

Figur 4:     eine Darstellung für den Verlauf der induzierten Spannungen über dem Polradwinkel;

Figur 5:     eine Darstellung für einen einzuprägenden Verlauf eines Querstromsystems über den Polradwinkel;

Figur 6:     eine Darstellung eines einzuprägenden Verlaufs eines Längsstromsystems über den Polradwinkel; und

Figur 7:     eine Darstellung eines einzuprägenden Verlaufs eines Längsspannungssystems.

Ausführungsformen der Erfindung

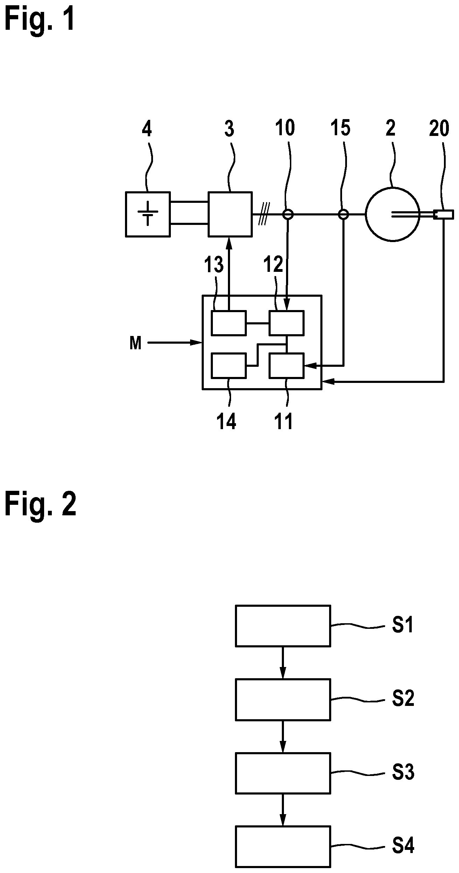

Figur 1 zeigt eine schematische Darstellung eines elektrischen Antriebssystems mit einer Regelvorrichtung für eine Synchronmaschine 2. Bei der Synchronmaschine 2 kann es sich zum Beispiel um eine beliebige Synchronmaschine handeln. Die Synchronmaschine 2 wird von einem Umrichter 3 gespeist. Beispielsweise kann es sich bei dem Umrichter 3 um einen Wechselrichter oder einen beliebigen anderen Spannungskonverter handeln, der eine Eingangsspannung in eine Spannung umwandelt, die dazu geeignet ist, die Synchronmaschine 2 zu speisen. In dem hier dargestellten Ausführungsbeispiel wandelt der Umrichter 3 eine Gleichspannung in eine dreiphasige Wechselspannung. Diese dreiphasige Wechselspannung wird daraufhin an die Klemmen der Synchronmaschine 2 angelegt. Die hier dargestellte Ausführungsform einer dreiphasigen Synchronmaschine ist nur beispielhaft zu verstehen. Ebenso sind auch Synchronmaschinen mit einer von drei abweichenden Anzahl von Phasen möglich. Beispielsweise sind auch vierphasige oder sechsphasige Synchronmaschinen möglich.

Zur Spannungsversorgung des Umrichters 3 ist der Umrichter 3 mit einer elektrischen Energiequelle 4 gekoppelt. Bei dieser elektrischen Energiequelle kann es sich beispielsweise um eine Gleichspannungsquelle handeln. Insbesondere kann als elektrische Energiequelle eine Traktionsbatterie eines Elektro- oder Hybridfahrzeuges verwendet werden. In diesem Fall kann das elektrische Antriebssystem aus Synchronmaschine 2, Umrichter 3 und elektrischer Energiequelle 4 beispielsweise als elektrisches Antriebssystem für ein Elektro- oder Hybridfahrzeug eingesetzt werden. Die Anwendung des elektrischen Antriebssystems ist jedoch nicht auf den Einsatz für Elektro- oder Hybridfahrzeuge begrenzt. Vielmehr kann das elektrische Antriebssystem auch für beliebige weitere Anwendungen eingesetzt werden.

Die Regelung des elektrischen Antriebssystems erfolgt dabei mittels einer Regelvorrichtung 1. Die Regelvorrichtung 1 empfängt hierzu eine Vorgabe für einen vorbestimmten Zustand M und generiert daraufhin Ansteuersignale für den Umrichter 3. Basierend auf den Ansteuersignalen für den Umrichter 3 stellt der Umrichter 3 an seinen Ausgangsanschlüssen, die mit der Synchronmaschine 2 gekoppelt sind, Ausgangsspannungen bereit. Entsprechend diesen Ausgangsspannungen werden in der Synchronmaschine 2 elektrische Ströme eingeprägt. Zur Regelung der Synchronmaschine 2 wertet die Regelvorrichtung 1 die elektrischen Ströme von dem Umrichter 3 in die Synchronmaschine 2 sowie die Drehzahl und/oder Rotorposition der Synchronmaschine 2 aus. Basierend auf einem Vergleich der Vorgabe für einen vorbestimmten Zustand der Synchronmaschine 2 mit den Werten der elektrischen Ströme sowie der Drehzahl und/oder der Rotorposition kann die Regelvorrichtung 1 die Ansteuerung des Umrichters 3 anpassen.

Zur Erfassung der elektrischen Ströme von dem Umrichter 3 in die Synchronmaschine 2 können zwischen dem Umrichter 3 und der Synchronmaschine 2 Stromsensoren 10 vorgesehen sein, die einen elektrischen Strom jeweils in einer Phase der Synchronmaschine 2 erfassen und ein zu dem erfassten Strom korrespondierendes Ausgangssignal bereitstellen. Dieses Ausgangssignal der Stromsensoren 10 kann dabei sowohl analog als auch digital bereitgestellt werden. Für die Erfassung der Rotorlage der Synchronmaschine und/oder der Drehzahl der Synchronmaschine 2 kann an der Synchronmaschine 2 ein Rotorlagendetektor 20 vorgesehen sein. Dieser Rotorlagendetektor 20 kann ein zu der Drehzahl und/oder der Rotorposition der Synchronmaschine korrespondierendes Ausgangssignal in analoger oder digitaler Form ausgeben und an der Regelvorrichtung 1 bereitstellen. Insbesondere kann aus diesem Signal von der Regelvorrichtung der Polradwinkel $\varphi$_el der Synchronmaschine 2 berechnet werden.

Die Regelvorrichtung 1 der Synchronmaschine 2 umfasst eine Spannungsmesseinrichtung 11, eine Rechenvorrichtung 12 und eine Ansteuervorrichtung 13. Ferner kann die Regelvorrichtung 1 einen Speicher 14 sowie gegebenenfalls noch weitere Komponenten umfassen.

Die Regelvorrichtung 1 für die Synchronmaschine 2 umfasst eine Spannungsmesseinrichtung 11 zum Ermitteln der Spannungsverläufe an den Klemmen der Synchronmaschine 2. Hierzu kann die Spannungsmesseinrichtung 11 beispielsweise mit Spannungssensoren 15 an den Ausgängen des Umrichters 3 oder an den Eingangsklemmen der Synchronmaschine 2 gekoppelt sein. Diese Spannungssensoren 15 erfassen jeweils die Spannungen an den Anschlüssen der Synchronmaschine 2 und stellen zu den erfassten Spannungen korrespondierende Ausgangssignale bereit. Diese Ausgangssignale können von der Spannungsmesseinrichtung 11 der Regelvorrichtung 1 erfasst und ausgewertet werden. Insbesondere kann die Spannungsmesseinrichtung 11 dabei die Spannungsverläufe ermitteln, die sich an den Klemmen der Synchronmaschine 2 einstellen, wenn die Synchronmaschine sich stromlos im Leerlauf und damit ohne Drehmomentanforderung dreht. Diese dabei ermittelten Spannungsverläufe entsprechen den Verläufen der in der Statorwicklung der Synchronmaschine induzierten Spannungen. Beispielsweise kann hierzu durch eine Ansteuervorrichtung 13 der Regelvorrichtung 1 für die Synchronmaschine 2 der Umrichter 3 derart angesteuert werden, dass alle Leistungsschalter des Umrichters 3 gesperrt sind und folglich kein Strom zwischen Umrichter 3 und Synchronmaschine 2 fließt.

Die Bezeichnung "stromlos" bezieht sich dabei auf die Statorströme der Synchronmaschine 2. Das hier beschriebene Verfahren kann beispielsweise auf permanenterregte Synchronmaschinen angewendet. Ferner ist das Verfahren auch für elektrisch erregte Synchronmaschinen anwendbar. Für elektrisch erregte Synchronmaschinen muss zur Ermittlung der induziertenSpannungsverläufe im stromlosen Leerlauf der Synchronmaschine 2 ein konstanter Erregerstrom in die Erregerwicklung der elektrisch erregten Synchronmaschine 2 eingeprägt werden. Weitere Unterschiede bestehen nicht, so dass im Folgenden nicht mehr gesondert auf elektrische erregte Synchronmaschinen eingegangen wird.

Alternativ ist es möglich, die in die Synchronmaschine induzierten Spannungen auch bei einer bestromten Synchronmaschine zu messen. Auch hierzu werden zunächst die Statorspannungen an den Klemmen der Synchronmaschine 2 gemessen. Anschließend werden von den Statorspannungen an den Klemmen der Synchronmaschine die Spannungsabfälle über bekannten Impedanzen der Statorwicklungen subtrahiert. Diese bekannten Impedanzen können insbesondere Induktivitäten sowie ohmsche Widerstände der Statorwicklungen umfassen. Alternativ zur Messung der Statorspannungen an den Klemmen der Synchronmaschine 2 oder den Ausgangsklemmen des Umrichters 3 können die Statorspannungen in diesem Fall auch aus dem jeweiligen Schaltzustand des Umrichters 3 und dessen Eingangsspannung berechnet werden.

In der Folge wird auch wenn von einem durch mindestens zwei Spannungskomponenten zu beschreibenden Drehspannungssystem die Rede ist zur besseren Verständlichkeit synonym von einer Spannung gesprochen und es wird auch wenn von einem Drehstromsystem die Rede ist synonym von einem Strom gesprochen.

Die Ermittlung des induzierten Spannungsverlaufs an den Klemmen der im Leerlauf stromlos drehenden Synchronmaschine erfolgt in Abhängigkeit über den elektrischen Polradwinkel der Synchronmaschine. Der so ermittelte Spannungsverlauf der in die Synchronmaschine induzierten Spannung über den elektrischen Polradwinkel kann beispielsweise in einem Speicher 14 der Regelvorrichtung abgelegt werden.

Die Ermittlung der induzierten Spannung der Synchronmaschine 2 über den Polradwinkel kann dabei beispielsweise am Ende einer Produktion des elektrischen Antriebssystems erfolgen. Beispielsweise kann die Ermittlung des induzierten Spannungsverlaufs der Synchronmaschine 2 für ein elektrisches Antriebssystem in einem Elektro- oder Hybridfahrzeug nach Abschluss der Produktion eines solchen Fahrzeugs erfolgen. Zusätzlich oder alternativ ist die Ermittlung des induzierten Spannungsverlaufs auch zu einem beliebigen späteren Zeitpunkt möglich. So kann beispielsweise die Ermittlung des induzierten Spannungsverlaufs auch beispielsweise jederzeit später, insbesondere zu regelmäßigen Zeitpunkten wiederholt werden. Auf diese Weise können zusätzliche Effekte, wie beispielsweise der Einfluss einer Temperatur oder auch Alterungseffekte mit berücksichtigt werden. Für ein Antriebssystem in einem Elektro- oder Hybridfahrzeug kann die Ermittlung der induzierten Spannung beispielsweise während eines Fahrens bei geringerer Geschwindigkeit ohne Drehmomentanforderung erfolgen. Bei höheren Geschwindigkeiten ist auch ohne Drehmomentanforderung üblicherweise ein negativer Längsstrom für den Betrieb der Synchronmaschine 2 erforderlich. Alternativ kann die induzierte Spannung auch bei einer bestromten Synchronmaschine 2 gemessen werden, wie dies oben bereits ausgeführt wurde.

Auf diese Weise ist es möglich, den Verlauf der induzierten Spannung einer drehenden Synchronmaschine 2 über den Polradwinkel für die Synchronmaschine 2 des elektrischen Antriebssystems individuell zu ermitteln und gegebenenfalls in dem Speicher 14 abzulegen. Auf Basis dieses Verlaufs der induzierten Spannung über den Polradwinkel kann daraufhin die Rechenvorrichtung 12 die Parameter für eine Ansteuerung der Synchronmaschine 2 berechnen, die zum Erreichen eines vorbestimmten Zustands der Synchronmaschine geeignet sind. Beispielsweise können die Parameter für die Ansteuerung der Synchronmaschine 2 für ein möglichst homogenes Drehmoment, insbesondere ein möglichst konstantes Drehmoment über die volle Umdrehung einer Synchronmaschine 2 ermittelt werden. Aber auch die Ansteuerung für weitere Vorgaben, wie zum Beispiel eine möglichst konstante Leistungsaufnahme der Synchronmaschine oder das Berücksichtigen eines zusätzlichen Reluktanzmomentes sind ebenso möglich.

Hierzu berechnet die Rechenvorrichtung 12 zunächst einen Soll-Stromverlauf, der in die Synchronmaschine 2 eingespeist werden soll, um die gewünschten Vorgaben, wie beispielsweise ein konstantes Drehmoment oder eine konstante Leistungsaufnahme, zu erreichen. Dabei können insbesondere auch nicht-sinusförmige Verläufe der induzierten Spannung, die durch die Spannungsmesseinrichtung ermittelt worden sind, berücksichtigt werden. Diese nicht-sinusförmigen Verläufe der induzierten Spannung der Synchronmaschine führen dabei in der Regel dazu, dass auch der durch die Rechenvorrichtung 12 berechnete Soll-Stromverlauf einen nicht-sinusförmigen Verlauf über den Polradwinkel ergibt. Dies gilt dabei sowohl für den zur Drehmomenteinprägung erforderlichen Querstrom als auch für den gegebenenfalls für eine Feldschwächung erforderlichen Längsstrom, wobei Längs- und Querstrom voneinander abweichende Verläufe über den Polradwinkel aufweisen können. Die Rechenvorrichtung 12 kann dabei für jeden Polradwinkel $\varphi\_el$ der Synchronmaschine unter Verwendung des ermittelten induzierten Spannungsverlaufs jeweils einen in die Synchronmaschine einzuspeisenden Strom berechnen, der zu den gewünschten Vorgaben, wie beispielsweise einem vorgegebenen Drehmoment oder einer vorgegebenen Leistungsaufnahme führt. Dazu wird der sogenannte Querstromsollwert I\_q,soll mit den zugehörigen normierten Querstromverläufen i\_q,a0($\varphi\_el$) und i\_q,b0($\varphi\_el$) multipliziert und es wird der sogenannte Längsstromsollwert I\_d,soll mit den zugehörigen normierten Längsstromsollwerten i\_d,a0(($\varphi\_el$) und i\_d,b0($\varphi\_el$) multipliziert. So entstehen die erforderlichen Stromsollwerte

$$i\_a,soll(\varphi\_el) = I\_q,soll * i\_q,a0(\varphi\_el) + I\_d,soll * i\_d,a0(\varphi\_el),$$

und

$$i\_b,soll(\varphi\_el) = I\_q,soll * i\_q,b0(\varphi\_el) + I\_d,soll * i\_d,b0(\varphi\_el).$$

Diese können dann noch in an sich bekannter Weise in dreiphasige Stromsollwerte umgerechnet werden.

Basierend auf dem durch die Rechenvorrichtung 12 wie oben beschrieben berechneten Soll-Stromverlauf, der zum Erreichen der Vorgaben in die Synchronmaschine 2 eingespeist werden soll, kann die Rechenvorrichtung 12 daraufhin einen Spannungsverlauf berechnen, der an den Klemmen der Synchronmaschine 2 angelegt werden muss, um den zuvor berechneten Soll-Stromverlauf in die Synchronmaschine einzuspeisen. Der Spannungsverlauf, der durch die Rechenvorrichtung 12 berechnet wird, kann in der Regel als Spannungsverlauf über den Polradwinkel $\varphi\_el$ berechnet werden. Die Berechnung des Spannungsverlaufs kann in vergleichbarer Weise wie die oben angegebene Berechnung des gewünschten Stromverlaufs erfolgen, indem feldorientierte Spannungssollwerte u\_d und u\_q jeweils mit den zuvor in Abhängigkeit des Polradwinkels $\varphi\_el$ berechneten normierten Spannungsverläufen u\_d.a0($\varphi\_el$), u\_d,b0($\varphi\_el$), u\_q,a0(($\varphi\_el$) und u\_q,b0($\varphi\_el$) multipliziert und die Produkte in entsprechender Weise addiert werden. Alternativ kann der Spannungsverlauf auch direkt aus den Sollstromverläufen i\_a,soll($\varphi\_el$) und i\_b,soll($\varphi\_el$) berechnet werden, beispielsweise unter Berücksichtigung der bekannten Parameter der Synchronmaschine 2 wie Induktivitäten und Widerständen in den Statorzweigen sowie dem Verlauf der induzierten Spannung über dem Polradwinkel $\varphi\_el$.

Aus dem so berechneten Spannungsverlauf, insbesondere dem Spannungsverlauf über den Polradwinkel $\varphi\_el$, kann daraufhin die Ansteuervorrichtung 13 für jeden Zeitpunkt bzw. jeden Polradwinkel $\varphi\_el$ der Synchronmaschine 2 die Ansteuersignale berechnen, mit denen der Umrichter 3 angesteuert werden muss, um den berechneten Stromverlauf an den Klemmen der Synchronmaschine 2 durch den Umrichter 3 bereitzustellen. Die dabei ermittelten Ansteuersignale für den Umrichter 3 hängen von der jeweiligen Konfiguration des Umrichters 3 ab. Für konventionelle Umrichter 3 sind bereits Verfahren bekannt, wie solche Umrichter 3 angesteuert werden müssen, um einen vorgegebenen Spannungsverlauf an den Ausgängen des Umrichters 3 und somit an den Klemmen der Synchronmaschine 2 bereitzustellen.

Durch Anlegen eines Spannungsverlaufs an den Klemmen der Synchronmaschine 2, der dem zuvor berechneten Spannungsverlauf entspricht, wird der in der Rechenvorrichtung 12 berechnete Soll-Stromverlauf in die Synchronmaschine 2 eingeprägt. Auf diese Weise können die Vorgaben für das Drehmoment, die Leistungsaufnahme oder weitere Vorgaben für jeden Phasenwinkel der Synchronmaschine sehr präzise eingestellt werden.

Die Synchronmaschine des elektrischen Antriebssystems kann dabei über einen großen Drehzahlbereich hinweg betrieben werden. Entsprechend muss auch der Umrichter 3 über einen zu diesem Drehzahlbereich korrespondierenden Frequenzbereich hinweg betrieben werden können, und die Messwerte für Strom und Spannung an der Synchronmaschine variieren ebenfalls über den zum Drehzahlbereich korrespondierenden Frequenzbereich. Um den Frequenzbereich, den ein Regler beherrschen muss, möglichst klein zu halten, hat es sich als vorteilhaft erwiesen, die Regelung üblicherweise in einem sogenannten feldorientierten Koordinatensystem auszuführen, welches mit dem Erregerfeld der Synchronmaschine rotiert. Für sinusförmige Strom- und Spannungsverläufe ist beispielsweise eine Transformation zwischen dem statororientierten Koordinatensystem, in dem die Ansteuerung der Synchronmaschine erfolgt und dem feldorientierten Koordinatensystem, in dem die Regelung erfolgt, als sogenannte "Park-Transformation" bekannt. Weist die induzierte Spannung der Synchronmaschine jedoch einen nicht-sinusförmigen Verlauf über den Polradwinkel auf, so ist eine konventionelle Transformation zwischen statororientiertem Koordinatensystem und feldorientiertem Koordinatensystem mit Nachteilen behaftet. Daher kann in einer Ausführungsform die Transformation zwischen dem statororientierten Koordinatensystem und dem feldorientierten Koordinatensystem auf die nicht-sinusförmigen Verläufe von Strom und Spannung angepasst werden. Beispielsweise können hierzu in der Regelvorrichtung 1 der Synchronmaschine 2 die Transformationsgleichungen für die Transformation zwischen statororientiertem Koordinatensystem und feldorientiertem Koordinatensystem an die nicht-sinusförmigen Strom- bzw. Spannungsverläufe angepasst werden. Dies kann beispielsweise in Form einer angepassten Rechenvorschrift erfolgen. Alternativ können die erforderlichen Werte bereits vorab berechnet und in Form einer Lookup-Tabelle oder ähnlichem abgespeichert werden.

Zur Vereinfachung der Transformation zwischen statororientiertem Koordinatensystem und feldorientiertem Koordinatensystem und zurück kann darüber hinaus auch noch eine Tiefpassfilterung bzw. Begrenzung der Strom- und/oder Spannungsverläufe auf eine vorgegebene Ordnung von Oberschwingungen erfolgen. Beispielsweise können die Strom- bzw. Spannungssignale auf Oberschwingungen der 5-, 7-, 11- oder 13-fachen Grundfrequenz begrenzt werden.

Eine Besonderheit besteht, wenn die Synchronmaschine 2 nicht nur ein Synchronmoment, sondern auch zusätzlich ein Reluktanzmoment aufweist. Viele permanenterregte Synchronmaschinen sind so aufgebaut, dass sie bei Feldschwächung ein Reluktanzmoment entwickeln, welches das Synchronmoment verstärkt. Für konstante Reluktanzmomente sind jedoch sinusförmige Statorströme und Statorspannungen erforderlich. Für ein konstantes Reluktanzmoment wären also folglich auch sinusförmige Längs- und Querstromverläufe optimal. Werden die Stromformen bzw. Spannungsformen für die Ansteuerung der Synchronmaschine 2, wie zuvor beschrieben, für nicht-sinusförmige Verläufe optimiert, so ergibt sich hieraus gegebenenfalls ein pulsierendes Reluktanzmoment. Um ein möglichst geringes Pulsieren des Gesamt-Drehmoments oder auch alternative Vorgaben zu erreichen, kann in diesem Fall eine betriebspunktabhängige gewichtete Mittelwertbildung erfolgen, wobei die Gewichtung beispielsweise entsprechend der Anteile des Synchron- und des Reluktanzmoments am Gesamtmoment erfolgen kann.

Figur 2 zeigt eine schematische Darstellung eines Ablaufdiagramms für ein Verfahren zur Regelung einer Synchronmaschine 2 gemäß einer Ausführungsform. Das Verfahren eignet sich dabei insbesondere zur Implementierung durch die zuvor beschriebene Regelvorrichtung 1, so dass durch dieses Verfahren insbesondere alle zuvor beschriebenen Schritte zur Regelung der Synchronmaschine 2 umgesetzt werden können. Umgekehrt können auch alle nachfolgend beschriebenen Verfahrensschritte durch die zuvor beschriebene Regelvorrichtung 1 implementiert werden.

In Schritt S1 wird ein induzierter Spannungsverlauf an den Klemmen einer drehenden Synchronmaschine 2 ermittelt. Insbesondere wird dabei der Verlauf der in der Statorwicklung der Synchronmaschine induzierten Spannung über den Polradwinkel $\varphi\_el$ ermittelt. In Schritt S2 wird ein Stromverlauf berechnet, der im Zusammenwirken mit dem ermittelten induzierten Spannungsverlauf zum Erreichen eines vorbestimmten Zustands an der Synchronmaschine geeignet ist. Als vorbestimmter Zustand kann beispielsweise ein konstantes Drehmoment unabhängig vom Polradwinkel $\varphi\_el$, eine konstante Leistungsaufnahme sowie das Berücksichtigen eines Reluktanzmomentes umfasst sein.

In Schritt S3 wird anschließend ein Spannungsverlauf, insbesondere ein Spannungsverlauf über den Polradwinkel $\varphi\_el$ berechnet, der dazu geeignet ist, den zuvor berechneten Stromverlauf an der Synchronmaschine einzustellen. In Schritt S4 wird schließlich die Synchronmaschine 2 mit dem berechneten Spannungsverlauf angesteuert. Die Ansteuerung kann dabei insbesondere durch Ansteuern eines Umrichters 3 erfolgen, der gemäß der Ansteuerung an der Synchronmaschine 2 den berechneten Spannungsverlauf einstellt.

Zur Ansteuerung der Synchronmaschine 2 wird ferner aus dem berechneten Stromverlauf ein Spannungsverlauf berechnet, der an der Synchronmaschine 2 eingestellt werden muss, um den erforderlichen Stromverlauf einzustellen.

Durch Ansteuern der Synchronmaschine mit diesen berechneten Sollvorgaben, wie Stromverlauf bzw. Spannungsverlauf, können auch für nicht-sinusförmige induzierte Spannungen unabhängig vom Polradwinkel $\varphi\_el$ möglichst konstante Sollvorgaben realisiert werden.

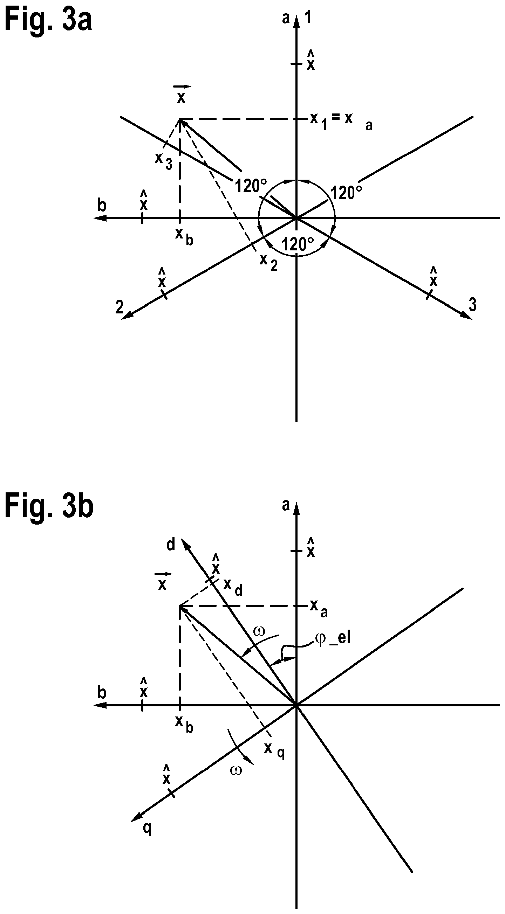

Im Folgenden wird unter Bezug auf die Figuren 3 bis 7 der Weg von der Messung der induzierten Spannung bis zur Vorgabe der Spannungen für ein konkretes Ausführungsbeispiel erläutert.

In den Figuren 3a und 3b sind zunächst die Zusammenhänge zwischen einem dreiphasigen Zeigerdiagramm mit den Achsen 1, 2 und 3, dem orthogonalen Koordinatensystem mit den Achsen a = 1 und b und dem feldorientierten Koordinatensystem mit den Achsen d und q dargestellt. Das Zeigerdiagramm in Figur 3a weist die drei um jeweils 120° gegeneinander gedrehten Achsen 1, 2 und 3 auf. Jede Momentanwertkombination eines dreiphasigen Größensystems kann durch einen Vektor x (Zeiger) mit der Amplitude x in der Ebene dargestellt werden. Die drei Komponenten $x\_1$, $x\_2$ und $x\_3$ dieses Vektors, die durch Projektion des Vektors auf die jeweilige Achse ermittelt werden, weisen immer die Summe 0 auf, wie dies bei dreiphasigen Größen der Fall ist. Ein sinusförmiges, dreiphasiges Stromsystem kann folglich durch einen mit konstanter Winkelgeschwindigkeit $\omega$ umlaufenden Vektor konstanter Amplitude dargestellt werden. Derselbe Vektor kann auch nur durch die zwei Komponenten $x\_a$ und $x\_b$ auf den Achsen a und b des orthogonalen Koordinatensystems eindeutig beschrieben werden. Figur 3b zeigt das ebenfalls orthogonale, feldorientierte Koordinatensystem dessen Achsen d und q um den Polradwinkel $\varphi\_el$ gegenüber den statororientierten Achsen a und b gedreht sind.

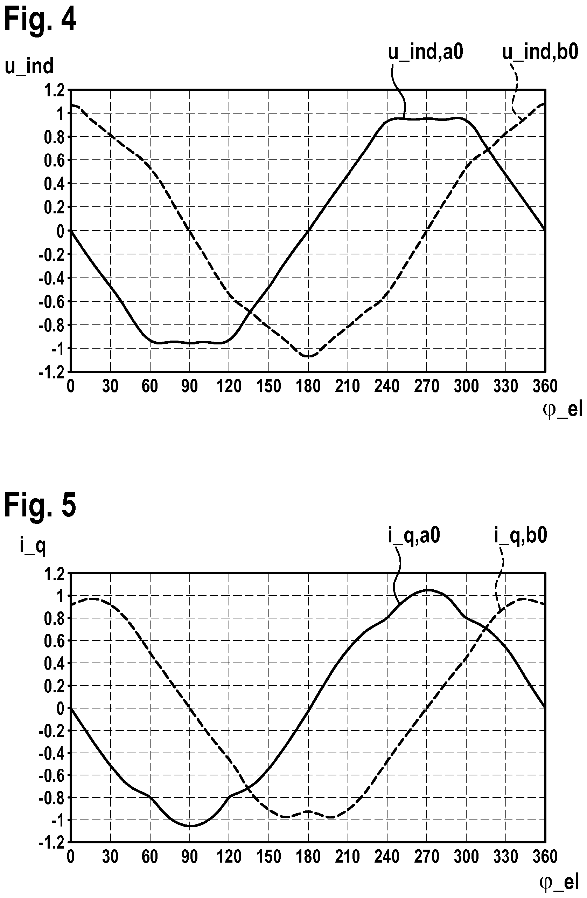

In Figur 4 sind beispielhafte Verläufe der normierten, induzierten Spannung u_ind,a0($\varphi\_el$) und u_ind,b0($\varphi\_el$) dargestellt, wie sie typischerweise an einer Synchronmaschine mit nahezu trapezförmigen induzierten Spannungen gemessen werden können. Die dort dargestellten Verläufe sind zudem oberhalb der 13-fachen Oberschwingung der Grundschwingung bandbegrenzt. Bei u_ind,a0 handelt es sich qualitativ um den Verlauf der in die Phase 1 gemessenen induzierten Spannung. In den anderen Phasen 2 und 3 wird derselbe Spannungsverlauf, aber um 120° bzw. 240° versetzt induziert. Projiziert man den so entstehenden normierten Zeiger auf die orthogonale Achse b, so entsteht der Verlauf u_ind,b0), der ebenfalls in Figur 4 dargestellt ist.

In Figur 5 ist ein Beispiel für die normierten Verläufe der Querstromkomponenten iq,a0($\varphi\_et$) und i_q,b0($\varphi\_el$) dargestellt, die bei den beispielhaften Verläufen der induzierten Spannungen aus Figur 4 zu einem über den Polradwinkel konstanten Drehmoment führt. Im vorliegenden Beispiel erfolgte die Bestimmung der normierten Querstromverläufe gemäß der Rechenvorschrift

$$i\_q,a0(\varphi\_el) = \sin^2(\varphi\_el) \,/\, u\_ind,a0(\varphi\_el)$$

und

$$i\_q,b0(\varphi\_el) = \cos^2(\varphi\_el) \,/\, u\_ind,b0(\varphi\_el).$$

Die normierte elektrische Leistung, die in mechanische Leistung gewandelt wird, ergibt sich damit zu:

$$i\_q,a0(\varphi\_el) * u\_ind,a0(\varphi\_el) + i\_q,b0(\varphi\_el) * u\_ind,b0(\varphi\_el) =$$
$$\sin^2(\varphi\_el) + \cos^2(\varphi\_el) = 1.$$

Dadurch ist sichergestellt, dass die elektrische Leistung, die in mechanische Leistung gewandelt wird, konstant ist und damit auch das Drehmoment. Dies ist jedoch nur eine beispielhafte Möglichkeit, die zu einem konstanten Drehmoment führt.

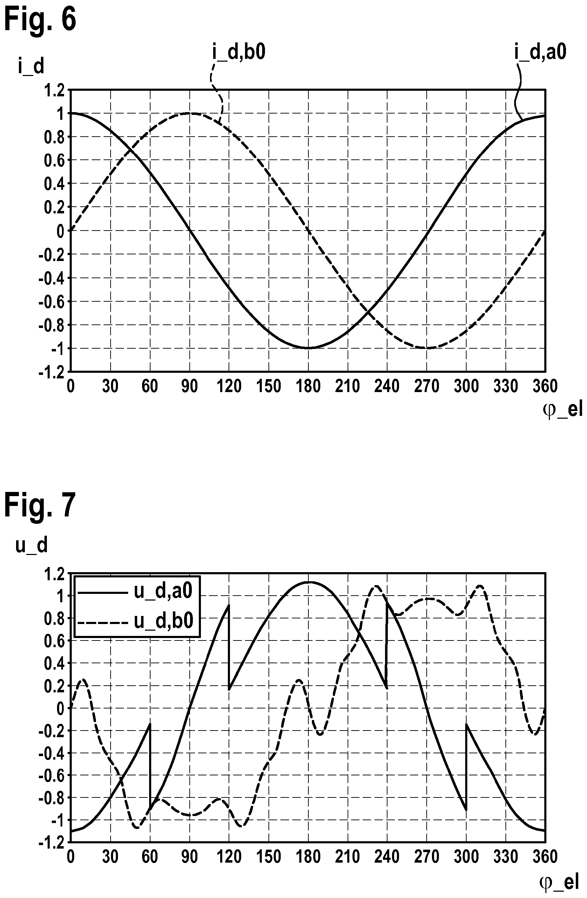

In Figur 6 ist ein Beispiel für die normierten Verläufe der Längsstromkomponenten i_d,a0($\varphi\_el$) und i_d,b0($\varphi\_el$) dargestellt. Diese sind so gewählt, dass das Magnetfeld der Permanentmagnete durch diese Längsströme über den Umfang des Luftspalts hinweg selbstähnlich geschwächt oder verstärkt wird. Die Rechenvorschrift für dieses Ausführungsbeispiel lautet:

$$i\_d, a0\,(\varphi\_el) = \int u\_ind, a0\,(\varphi\_el)\,d\varphi\_el$$

und

$$i\_d, b0\,(\varphi\_el) = \int u\_ind, b0\,(\varphi\_el)\,d\varphi\_el.$$

Bei Wahl der Stromformen für das Längsstromsystem entsprechend diesem Ausführungsbeispiel ist damit weiter gegeben, dass die normierten Querspannungsverläufe u_q,a0($\varphi$_el) und u_q,b0($\varphi$_el), die zur Einprägung dieser Längsstromverläufe benötigt werden, jeweils identisch mit u_ind,a0($\varphi$_el) beziehungsweise u_ind,b0($\varphi$_el) sind.

Figur 7 zeigt schließlich die normierten Längsspannungsverläufe u_d,a0($\varphi$_el) und u_d,b0($\varphi$_el), die zur Einprägung von Querströmen mit den Verläufen entsprechend Figur 5 erforderlich sind. Die Rechenvorschrift zu deren Ermittlung lautet im hier dargestellten Ausführungsbeispiel:

$$u\_d, a0\,(\varphi\_el) = (i\_q, a0\,(\varphi\_el))/d\varphi\_el$$

und

$$u\_d, b0\,(\varphi\_el) = (i\_q, b0\,(\varphi\_el))/d\varphi\_el\,.$$

Zusammenfassend betrifft die vorliegende Erfindung eine Ansteuerung von Synchronmaschinen zur Erreichung eines annähernd konstanten Drehmoments unabhängig vom Polradwinkel $\varphi$_el. Hierzu wird zunächst die induzierte Spannung der im Leerlauf drehenden Synchronmaschine ermittelt. Ausgehend von dem Spannungsverlauf der induzierten Spannung über den Polradwinkel $\varphi$_el kann daraufhin ein Stromverlauf berechnet werden, der unabhängig vom Polradwinkel $\varphi$_el der Synchronmaschine 2 ein konstantes Drehmoment oder beliebige andere Vorgaben erzielt. Insbesondere kann dabei auch für nicht-sinusförmige Verläufe der induzierten Spannung der Synchronmaschine 2 ein ebenfalls nicht-sinusförmiger Stromverlauf berechnet werden, um unabhängig vom Polradwinkel $\varphi$_el der Synchronmaschine möglichst konstante Sollvorgaben realisieren zu können.

**Patentansprüche**

1. Verfahren zur Regelung einer Synchronmaschine (2) in einem Elektro- oder Hybridfahrzeug während eines Fahrens, mit den Schritten:

   Ermitteln (S1) eines Spannungsverlaufs von nicht-sinusförmigen induzierten Spannungen über den Polradwinkel an den Klemmen der drehenden Synchronmaschine (2); **gekennzeichnet durch** Berechnen (S2) eines nicht-sinusförmigen Stromverlaufs über den Polradwinkel, der im Zusammenwirken mit dem ermittelten Spannungsverlauf zum Erreichen eines vorbestimmten Zustands an der Synchronmaschine (2) geeignet ist; Berechnen (S3) eines Spannungsverlauf über den Polradwinkel an den Klemmen der Synchronmaschine (2), der dazu geeignet ist, den berechneten nicht-sinusförmigen Stromverlauf über den Polradwinkel an der Synchronmaschine (2) einzustellen; und Ansteuern (S4) der Synchronmaschine mit dem berechneten Spannungsverlauf, wobei die Ermittlung des Spannungsverlaufs von nicht-sinusförmigen induzierten Spannungen über den Polradwinkel während eines Fahrens des Elektro- oder Hybridfahrzeugs erfolgt.

2. Verfahren nach Anspruch 1, wobei der vorbestimmte Zustand der Synchronmaschine (2) ein konstantes Drehmoment der Synchronmaschine (2), eine konstante Leistungsaufnahme der Synchronmaschine (2) und/oder das Berücksichtigen eines Reluktanzmoments der Synchronmaschine (2) umfasst.

3. Verfahren nach Anspruch 1 oder 2, wobei das Ermitteln (S1) des Spannungsverlaufs das Messen der Spannung an den Klemmen der Synchronmaschine (2) in einem statorstromlosen Betrieb der Synchronmaschine (2) umfasst.

4. Verfahren nach Anspruch 1 oder 2, wobei das Ermitteln (S1) des Spannungsverlaufs das Messen des Spannungsverlaufs einer bestromten Synchronmaschine (2) und das Subtrahieren von Spannungsabfällen an bekannten Impedanzen der Statorwicklung der Synchronmaschine (2) umfasst.

5. Verfahren nach einem der Ansprüche 1 bis 4, wobei das Berechnen (S2) des Stromverlaufs und/oder das Berechnen (S3) des Spannungsverlaufs eine Transformation zwischen einem statororientierten Koordinatensystem und einem feldorientierten Koordinatensystem umfasst.

6. Verfahren nach Anspruch 5, wobei die Transformation zwischen dem statororientierten Koordinatensystem und dem feldorientierten Koordinatensystem auf einen nicht-sinusförmigen Stromverlauf und/oder einen nicht-sinusförmigen Spannungsverlauf angepasst ist.

**7.** Verfahren nach einem der Ansprüche 1 bis 6, wobei der Schritt (S1) zum Ermitteln des Spannungsverlaufs eine Tiefpassfilterung des ermittelten Spannungsverlaufs umfasst.

**8.** Regelvorrichtung (1) für eine Synchronmaschine (2) in einem Elektro- oder Hybridfahrzeug, mit:

einer Spannungsmesseinrichtung (11), die dazu ausgelegt ist, einen Spannungsverlauf von nicht-sinusförmigen induzierten Spannungen über den Polradwinkel zu ermitteln, der in der Statorwicklung der drehenden Synchronmaschine (2) induziert wird; **gekennzeichnet durch** eine Rechenvorrichtung (12), die dazu ausgelegt ist, einen nicht-sinusförmigen Stromverlauf über den Polradwinkel zu berechnen, der im Zusammenwirken mit dem ermittelten Spannungsverlauf zum Erreichen eines vorbestimmten Zustands an der Synchronmaschine (2) geeignet ist, und einen Spannungsverlauf über den Polradwinkel an den Klemmen der Synchronmaschine (2) zu berechnen, der dazu geeignet ist, den berechneten nicht-sinusförmigen Stromverlauf über den Polradwinkel an der Synchronmaschine (2) einzustellen; und eine Ansteuervorrichtung (13), die dazu ausgelegt ist, die Synchronmaschine (2) mit dem berechneten Spannungsverlauf anzusteuern, wobei die Ermittlung des Spannungsverlaufs während eines Fahrens des Elektro- oder Hybridfahrzeugs erfolgt.

**9.** Regelvorrichtung (1) nach Anspruch 8, mit einer Speicher (14), der dazu

ausgelegt ist, den von der Spannungsmesseinrichtung (11) ermittelten Spannungsverlauf abzuspeichern, wobei die Rechenvorrichtung (12) dazu ausgelegt ist, den Stromverlauf unter Verwendung des in dem Speicher (14) abgespeicherten Spannungsverlaufs zu berechnen.

**10.** Elektrisches Antriebssystem in einem Elektro- oder Hybridfahrzeug, mit:

einer Synchronmaschine (2), eines Regelvorrichtung (1) für eine Synchronmaschine (2) in einem Elektro- oder Hybridfahrzeug nach Anspruch 8 oder 9, und einem Spannungswandler (3), der dazu ausgelegt ist, den durch die Regelvorrichtung (1) berechneten Spannungsverlauf an der Synchronmaschine (2)) bereitzustellen.

**Claims**

**1.** Method for controlling a synchronous machine (2) in an electric or hybrid vehicle during travel, having the following steps:

identifying (S1) a voltage profile of non-sinusoidal induced voltages over the pole wheel angle at the terminals of the rotating synchronous machine (2); **characterized by** calculating (S2) a non-sinusoidal current profile over the pole wheel angle, which is suitable, in conjunction with the identified voltage profile, for achieving a predetermined state at the synchronous machine (2); calculating (S3) a voltage profile over the pole wheel angle at the terminals of the synchronous machine (2), which voltage profile is suitable for setting the calculated non-sinusoidal current profile over the pole wheel angle at the synchronous machine (2); and actuating (S4) the synchronous machine by way of the calculated voltage profile, wherein the identification of the voltage profile of non-sinusoidal induced voltages over the pole wheel angle takes place during travel of the electric or hybrid vehicle.

**2.** Method according to Claim 1, wherein the predetermined state of the synchronous machine (2) comprises a constant torque of the synchronous machine (2), a constant power draw of the synchronous machine (2) and/or taking into account a reluctance torque of the synchronous machine (2).

**3.** Method according to Claim 1 or 2, wherein the identification (S1) of the voltage profile comprises the measurement of the voltage at the terminals of the synchronous machine (2) during operation of the synchronous machine (2) without a stator current.

4. Method according to Claim 1 or 2, wherein the identification (S1) of the voltage profile comprises the measurement of the voltage profile of an energized synchronous machine (2) and the subtraction of voltage drops at known impedances of the stator winding of the synchronous machine (2).

5. Method according to one of Claims 1 to 4, wherein the calculation (S2) of the current profile and/or the calculation (S3) of the voltage profile comprises a transformation between a stator-oriented coordinate system and a field-oriented coordinate system.

6. Method according to Claim 5, wherein the transformation between the stator-oriented coordinate system and the field-oriented coordinate system is adjusted to a non-sinusoidal current profile and/or a non-sinusoidal voltage profile.

7. Method according to one of Claims 1 to 6, wherein the step (S1) for identifying the voltage profile comprises low-pass filtering of the identified voltage profile.

8. Control apparatus (1) for a synchronous machine (2) in an electric or hybrid vehicle, having:

a voltage measurement device (11), which is configured to identify a voltage profile of non-sinusoidal induced voltages over the pole wheel angle, which is induced in the stator winding of the rotating synchronous machine (2); **characterized by**
a computation apparatus (12), which is configured to calculate a non-sinusoidal current profile over the pole wheel angle, which is suitable, in conjunction with the identified voltage profile, for achieving a predetermined state at the synchronous machine (2) and to calculate a voltage profile over the pole wheel angle at the terminals of the synchronous machine (2), which voltage profile is suitable for setting the calculated non-sinusoidal current profile over the pole wheel angle at the synchronous machine (2); and
an actuation apparatus (13), which is configured to actuate the synchronous machine (2) by way of the calculated voltage profile,
wherein the identification of the voltage profile takes place during travel of the electric or hybrid vehicle.

9. Control apparatus (1) according to Claim 8, having a memory (14), which is configured to store the voltage profile identified by the voltage measurement device (11),
wherein the computation apparatus (12) is configured to calculate the current profile using the voltage profile stored in the memory (14).

10. Electric drive system in an electric or hybrid vehicle, having:

a synchronous machine (2),
a control apparatus (1) for a synchronous machine (2) in an electric or hybrid vehicle according to Claim 8 or 9, and
a voltage converter (3), which is configured to provide the voltage profile, which is calculated by the control apparatus (1), at the synchronous machine (2).

**Revendications**

1. Procédé de régulation d'une machine synchrone (2) dans un véhicule électrique ou hybride pendant un déplacement, comprenant l'étape consistant à :

déterminer (S1) une courbe de tension de tensions induites non sinusoïdales par l'intermédiaire de l'angle de roue polaire aux bornes de la machine synchrone (2) tournante ;
**caractérisé par** les étapes consistant à
calculer (S2) une courbe de courant non sinusoïdale par l'intermédiaire de l'angle de roue polaire qui est adaptée en coopération avec la courbe de tension déterminée pour atteindre un état prédéterminé au niveau de la machine synchrone (2) ;
calculer (S3) une courbe de tension par l'intermédiaire de l'angle de roue polaire aux bornes de la machine synchrone (2) qui est adaptée pour régler la courbe de courant non sinusoïdale calculée par l'intermédiaire de l'angle de roue polaire au niveau de la machine synchrone (2) ; et
piloter (S4) la machine synchrone avec la courbe de tension calculée, la détermination de la courbe de tension étant effectuée à partir de tensions induites non sinusoïdales par l'intermédiaire de l'angle de roue polaire pendant un déplacement du véhicule électrique ou hybride.

**2.** Procédé selon la revendication 1, dans lequel l'état prédéterminé de la machine synchrone (2) comprend un couple constant de la machine synchrone (2), une puissance absorbée constante de la machine synchrone (2) et/ou la prise en compte d'un couple de reluctance de la machine synchrone (2).

**3.** Procédé selon la revendication 1 ou 2, dans lequel la détermination (S1) de la courbe de tension comprend la mesure de la tension aux bornes de la machine synchrone (2) dans un fonctionnement sans courant de stator de la machine synchrone (2).

**4.** Procédé selon la revendication 1 ou 2, dans lequel la détermination (S1) de la courbe de tension comprend la mesure de la courbe de tension d'une machine synchrone (2) sous tension et la soustraction de chutes de tension à des impédances connues de l'enroulement de stator de la machine synchrone (2).

**5.** Procédé selon l'une quelconque des revendications 1 à 4, dans lequel le calcul (S2) de la courbe de courant et/ou le calcul (S3) de la courbe de tension comprennent une transformation entre un système de coordonnées orienté stator et un système de coordonnées orienté champ.

**6.** Procédé selon la revendication 5, dans lequel la transformation entre le système de coordonnées orienté stator et le système de coordonnées orienté champ est adaptée à une courbe de courant non sinusoïdale et/ou à une courbe de tension non sinusoïdale.

**7.** Procédé selon l'une quelconque des revendications 1 à 6, dans lequel l'étape (S1) de détermination de la courbe de tension comprend un filtrage passe-bas de la courbe de tension déterminée.

**8.** Dispositif de régulation (1) destiné à une machine synchrone (2) dans un véhicule électrique ou hybride, comprenant :

un dispositif de mesure de tension (11) qui est conçu pour déterminer une courbe de tension de tensions induites non sinusoïdales par l'intermédiaire de l'angle de roue polaire qui est induit dans l'enroulement de stator de la machine synchrone (2) tournante ;
**caractérisé par** un dispositif de calcul (12) qui est conçu pour calculer une courbe de courant non sinusoïdale par l'intermédiaire de l'angle de roue polaire qui est adaptée en coopération avec la courbe de tension déterminée pour atteindre un état prédéterminé au niveau de la machine synchrone (2), et pour calculer une courbe de tension par l'intermédiaire de l'angle de roue polaire aux bornes de la machine synchrone (2) qui est adaptée pour régler la courbe de courant non sinusoïdale, calculée par l'intermédiaire de l'angle de roue polaire, au niveau de la machine synchrone (2) ; et
un dispositif de pilotage (13) qui est conçu pour piloter la machine synchrone (2) par la courbe de tension calculée, la détermination de la courbe de tension étant effectuée pendant un déplacement du véhicule électrique ou hybride.

**9.** Dispositif de régulation (1) selon la revendication 8, comprenant une mémoire (14) qui est conçue pour mémoriser la courbe de tension déterminée par le dispositif de mesure de tension (11),
le dispositif de calcul (12) étant conçu pour calculer la courbe de courant en utilisant la courbe de tension mémorisée dans la mémoire (14).

**10.** Système d'entraînement électrique dans un véhicule électrique ou hybride, comprenant :

une machine synchrone (2),
un dispositif de régulation (1) pour une machine synchrone (2) dans un véhicule électrique ou hybride selon la revendication 8 ou 9, et
un convertisseur de tension (3) qui est conçu pour fournir au niveau de la machine synchrone (2) la courbe de tension calculée par le dispositif de régulation (1) .

# Fig. 1

# Fig. 2

**Fig. 3a**

**Fig. 3b**

## Fig. 4

## Fig. 5

## Fig. 6

## Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010043454 A1
- EP 0831580 A2
- DE 102011089341 A1
- DE 102004001932 A1